# EUROPÄISCHE PATENTSCHRIFT

(11) **EP 4 286 723 B1**
(45) Veröffentlichungstag und Bekanntmachung des Hinweises auf die Patenterteilung: **29.05.2024**
(21) Anmeldenummer: 22176058.0
(22) Anmeldetag: 30.05.2022
(51) Int. Cl.: F16K 37/00, F16K 31/50, F16K 15/18, F16K 17/06, F16K 47/00

(54) **ABSPERRVENTIL**
SHUT-OFF VALVE
SOUPAPE D'ARRÊT

(43) Veröffentlichungstag der Anmeldung: 06.12.2023
(73) Patentinhaber: Flühs Drehtechnik GmbH, 58515 Lüdenscheid (DE)
(72) Erfinder: Roicke, Stefan, 58849 Herscheid (DE)
(74) Vertreter: Patentanwälte Dörner & Kötter PartG mbB

(56) Entgegenhaltungen:
- CA-A1- 2 217 337
- DE-C1- 19 705 982
- DE-U1-202022 100 701
- US-A1- 2012 261 601
- US-A1- 2020 088 318

## Beschreibung

Die Erfindung betrifft ein Absperrventil, insbesondere ein Rückflussverhindererventil, mit einem Kopfstück, in dem ein Druckzylinder angeordnet ist, der mit einer Spindel verbunden ist, über deren Drehung der Druckzylinder in dem Kopfstück verschiebbar ist und der einen Rückschlagkolben aufnimmt, der in einem ersten Kolbenraum des Druckzylinders verschiebbar angeordnet ist und der endseitig mit einer Dichtanordnung versehen ist.

Absperrventile werden in Absperrarmaturen eingesetzt. Dabei ist an einem Kolben ein Dichtungselement angeordnet, welches innerhalb der Armatur in den Leitungsweg einbringbar ist, wodurch der Durchfluss gesperrt ist. Hierbei ist der Kolben schräg zur Leitung angeordnet und mit einem Handrad verbunden, über das der Kolben bewegbar ist. Bei als Rückflussverhindererventil ausgebildeten Absperrventilen, wie sie beispielsweise in der EP 2 325 533 B1 beschrieben sind, ist der Kolben zur Rückflussverhinderung regelmäßig über eine Druckfeder in Richtung der Dichtfläche vorgespannt. Zum Absperren des Rückflussverhindererventils ist ein Druckstück angeordnet, das den Kolben umfassend auf das Dichtelement des Kolbens aufgefahren werden kann. In der Druckschrift DE 20 2022 100701 U1 wird ein weiteres Rückflussverhindererventil offenbart, mit einem Kopfstück, in dem ein Druckzylinder angeordnet ist, der mit einer Spindel verbunden ist, über deren Drehung der Druckzylinder in dem Kopfstück verschiebbar ist und der einen Rückschlagkolben aufnimmt, der in einem ersten Kolbenraum des Druckzylinders verschiebbar angeordnet ist und der endseitig mit einer Dichtanordnung versehen ist. Die Druckschriften US 2012/261601 A1, DE 197 05 982 C1, CA 2 217 337 A1 und US 2020/088318 A1 offenbaren verschiedene Hubventile mit Anzeigeeinrichtungen.

Absperrventile haben zwei definierte Stellungen, für die sie ausgelegt sind: In der Stellung "Ventil geöffnet" ist der Kolben vollständig eingefahren, in der Stellung "Ventil geschlossen" ist der Kolben ausgefahren und liegt mit dem an diesem endseitig angeordneten Dichtelement an einem Ventilsitz auf. Der Kolben ist hierbei regelmäßig in Form einer Spindel ausgeführt, die über einen Gewindeeingriff innerhalb des Kopfstücks, in dem diese geführt ist, durch Drehung ein- bzw. ausfahrbar ist.

Als Rückflussverhindererventile ausgeführte Absperrventile weisen ebenfalls einen Kolben auf, der endseitig mit einem Dichtelement versehen ist, sowie einen Druckzylinder, der in der Stellung "Ventil geschlossen" ausgefahren ist und auf dem Dichtelement des Kolbens aufliegt. In der Stellung "Ventil geöffnet" ist der Druckzylinder vollständig eingefahren.

In der Praxis kommt es jedoch häufig vor, dass ein Absperrventil - absichtlich, um Wasser zu sparen, oder versehentlich - nicht vollständig geschlossen wird, sondern in einer Zwischenposition des Kolbens - bzw. bei einem Rückflussverhindererventil in einer Zwischenposition des Druckzylinders - verbleibt. Hierbei besteht - insbesondere bei Verbleib dieser Zwischenposition über einen längeren Zeitraum - die Problematik, dass sich an der Außenmantelfläche des Kolbens bzw. des Druckzylinders Ablagerungen bilden können, wodurch Dichtung zwischen dem Kolben bzw. dem Druckzylinder und dem Kopfstück, in dem dieser geführt ist, beeinträchtigt ist.

Hier setzt die vorliegende Erfindung an. Der Erfindung liegt die Aufgabe zu Grunde, ein Absperrventil der vorstehenden Art zu schaffen, bei dem einem unbemerkten Verbleib des Kolbens - bzw. bei Ausbildung als Rückflussverhindererventil des Druckzylinders - in einer Zwischenposition entgegengewirkt ist. Gemäß der Erfindung wird diese Aufgabe durch ein Absperrventil mit den Merkmalen des kennzeichnenden Teils des Patentanspruchs 1 gelöst.

Mit der Erfindung ist ein Absperrventil geschaffen, bei dem einem unbemerkten Verbleib des Druckzylinders in einer Zwischenposition entgegengewirkt ist. Dadurch, dass der Druckzylinder mit wenigstens einer Anzeigefläche verbunden ist, die derart mit dem Druckzylinder gekoppelt ist, dass sie in Axialrichtung eine zu dem Druckzylinder proportionale Bewegung aufweist, wobei eine die Anzeigefläche umgebende Anzeigehülse angeordnet ist, die wenigstens ein Fenster aufweist, das von der Anzeigefläche in Axialrichtung überfahrbar ist, ist eine Sichtbarmachung der Anzeigefläche in wenigstens einer definieren Axialposition des Druckzylinders ermöglicht.

In einer vorteilhaften Ausgestaltung ist das Absperrventil als Rückflussverhindererventil ausgebildet, wobei der Druckzylinder einen Rückschlagkolben aufnimmt, der in einem ersten Kolbenraum des Druckzylinders verschiebbar angeordnet ist und der endseitig mit einer Dichtanordnung versehen ist.

In Weiterbildung der Erfindung ist die Spindel drehfest mit einer Gewindeglocke verbunden, auf der die wenigstens eine Anzeigefläche angeordnet ist und die ein erstes Innengewinde aufweist, das mit einem außen an dem Kopfstück angeordneten Außengewinde im Eingriff ist, wobei in der Gewindeglocke axial vor dem ersten Innengewinde ein innendurchmesserreduzierter Abschnitt angeordnet ist, der ein zweites Innengewinde aufweist, das mit einem außen an dem Druckzylinder angeordneten Außengewinde im Eingriff ist, wobei vorzugsweise das erste Innengewinde ein Rechtsgewinde und das zweite Innengewinde ein Linksgewinde ist. Hierdurch ist durch Drehung der Spindel eine Verschiebung des den Rückschlagkolben aufnehmenden Druckzylinders sowie proportional zu diesem eine Verschiebung der die Anzeigefläche aufweisenden Gewindeglocke in dieselbe Richtung bewirkt, die auf diese Weise mit der Anzeigefläche ein Fenster der Hülse axial überfahren kann. Weiterhin ist durch Drehung der Spindel eine Verschiebung des von dem Druckzylinder aufgenommenen Rückschlagkolbens additiv zur gleichgerichteten Verschiebung des Druckzylinders in dem Kopfstück bewirkt.

In Ausgestaltung der Erfindung ist die Gewindeglocke aus einem topfförmigen Trägerstück gebildet, das einen hohlzylindrische Ansatz aufweist, der das zweite Innengewinde aufweist und der mit einem Außengewinde versehen ist, auf das ein dieses in der Länge überragende Gewindehülse aufgeschraubt und nicht lösbar fixiert, insbesondere verklebt ist, die das erste Innengewinde aufweist. Hierdurch ist die Herstellung der Gewindeglocke sowie die Montage des Rückflussverhindererventils vereinfacht.

In weiterer Ausgestaltung der Erfindung ist die Hülse die Gewindeglocke umgebend außen an dem Kopfstück fixiert. Dabei weist die Hülse vorzugsweise eine Rastnase auf, mit der sie auf eine an dem Kopfstück hierzu angeordnete Rastnut verrastet ist. Hierdurch ist die Montage der Hülse erleichtert.

In Weiterbildung der Erfindung weist die wenigstens eine Anzeigefläche wenigstens eine die "Offen-Stellung" kennzeichnende und wenigstens eine die "Geschlossen-Stellung" kennzeichnende Markierung auf. Hierdurch ist eine gute Erfassung der Endstellungen des Druckzylinders von außen erzielt.

In Ausgestaltung der Erfindung weisen die Markierungen unterschiedliche Farben auf. Hierdurch ist die Erfassbarkeit der Endstellungen des Druckzylinders von außen weiter verbessert.

In weiterer Ausgestaltung der Erfindung ist auf der Spindel ein Griffstück angeordnet und mit dieser drehfest verbunden, in das die Hülse hineinragt. Hierdurch ist die Hülse am Kopfstück fixiert und im Griffstück radial geführt.

In Weiterbildung der Erfindung umfasst der Druckzylinder eine Druckausgleichspumpe, die durch einen zweiten Kolbenraum des Druckzylinders gebildet ist, der über einen Durchgangskanal mit dem ersten Kolbenraum verbunden ist und in dem ein Pumpkolben verschiebbar angeordnet ist, der über einen Gewindeeingriff mit der Spindel verbunden ist, über deren Drehung er verschiebbar ist. Hierdurch ist durch eine Drehung der Spindel zur Bewegung des Druckzylinders zugleich ein Antrieb der Druckausgleichspumpe bewirkt, wodurch das von dem Druckzylinder beim Verfahren verdrängte Wasser abgesaugt wird. Zudem ist bei Drehung der Spindel eine Verschiebung des Pumpkolbens in dem zweiten Kolbenraum bewirkt, wodurch ein Unterdruck erzielt ist, durch den wiederum über den Durchgangskanal durch den ersten Kolbenraum Wasser aus dem Leitungsstück angesogen wird. Der Druck in dem Leitungsstück ist folglich in jeder Stellung des Druckzylinders gleich, weshalb eine Bewegung des Druckstücks von Hand uneingeschränkt möglich bleibt.

In Ausgestaltung der Erfindung ist der Rückschlagkolben in dem ersten Kolbenraum über einen Gleitring geführt, der mit einem Druckausgleichsspalt versehen ist. Hierdurch ist eine Führung des Rückschlagkolbens ohne Beeinträchtigung der Verbindung zwischen zweitem Kolbenraum und dem Leitungsstück, in den das Rückflussverhindererventil eingesetzt ist, erzielt.

In weiterer Ausgestaltung der Erfindung weist der Pumpkolben eine Führungsstange auf, die durch den Durchgangskanal hindurchragt. Hierdurch ist eine zuverlässige Führung des Pumpkolbens erzielt, wodurch einem ungewollten Verkanten entgegengewirkt ist.

In Weiterbildung der Erfindung weist der Rückschlagkolben eine axiale Sackbohrung auf, in welche die Führungsstange in einer in den ersten Kolbenraum eingefahrenen Position des Rückschlagkolbens eingreift, wobei in den Rückschlagkolben eine radiale Druckausgleichsbohrung eingebracht ist, die in der axialen Sackbohrung mündet. Hierdurch ist eine kompakte Bauweise erzielt. Beim Einfahren des Rückschlagkolbens umfasst dieser die Führungsstange. Das durch die Führungsstange in der Sackbohrung des Rückschlagkolbens verdrängte Wasser kann durch die radiale Druckausgleichsbohrung entweichen.

In Ausgestaltung der Erfindung ist in der axialen Sackbohrung des Rückschlagkolbens eine Feder angeordnet, die gegen den Druckzylinder vorgespannt ist. Hierdurch ist ein Rückfluss von Wasser in der Leitung, in die das Rückflussverhindererventil eingesetzt ist, bei abnehmendem Leitungsdruck verhindert. Die vorzugsweise als Druckspiralfeder ausgebildete Feder findet ausreichend Bauraum zwischen der Innenwandung der Sackbohrung des Rückschlagkolbens und der Führungsstange.

In weiterer Ausgestaltung der Erfindung weist der Pumpkolben eine Antriebsstange auf, die mit der Spindel im Gewindeeingriff ist. Dabei weist die Antriebsstange vorzugsweise ein Außengewinde auf, das in eine in der Spindel eingebrachte Gewindebohrung eingreift. Hierdurch ist eine axiale Bewegung der Antriebsstange und damit des Pumpkolbens bei Drehung der Spindel bewirkt.

In einer anderen Ausgestaltung der Erfindung weist der Druckzylinder eine Sackbohrung auf, die mit einem Innengewinde versehen ist, in das ein hierzu an der Spindel endseitig angeordnetes Außengewinde eingreift. Hierdurch ist ein Absperrventil mit einfacherem Aufbau ohne Rückflussverhinderer-Funktion erzielt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

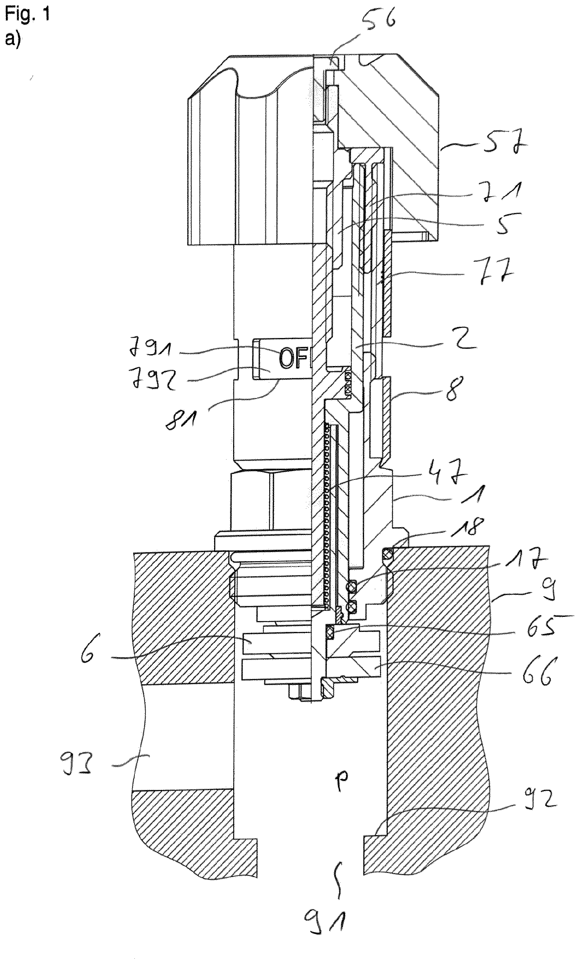

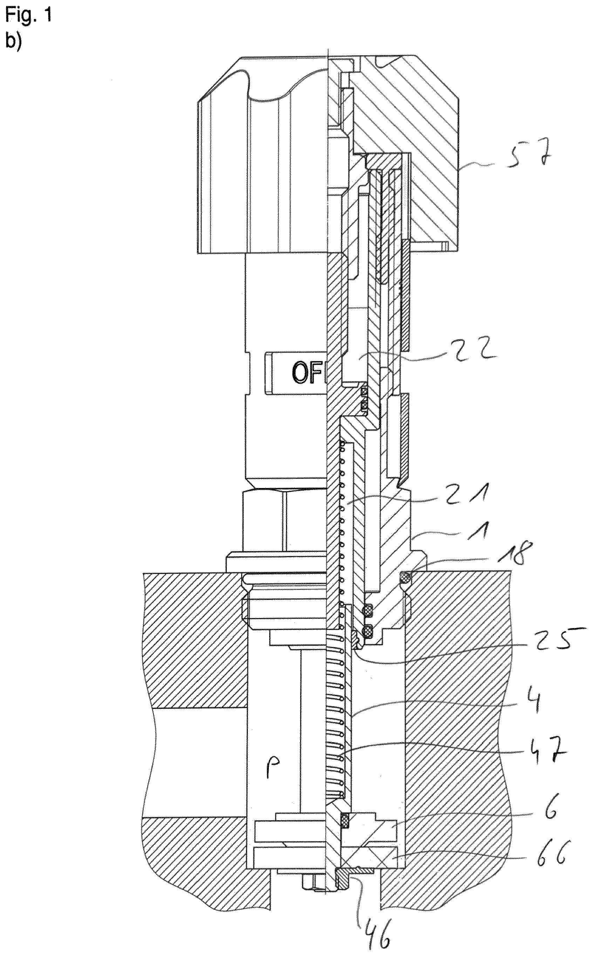

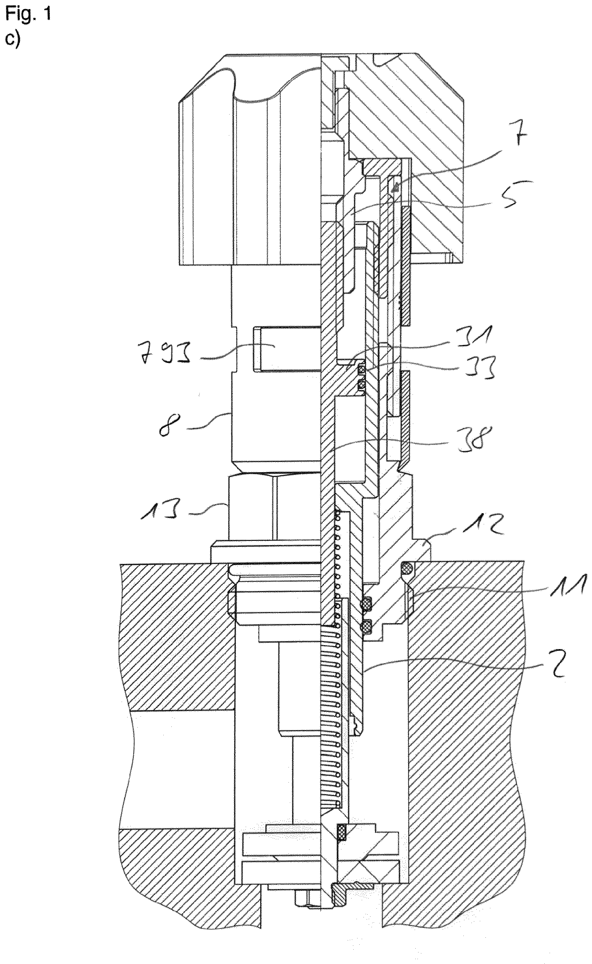

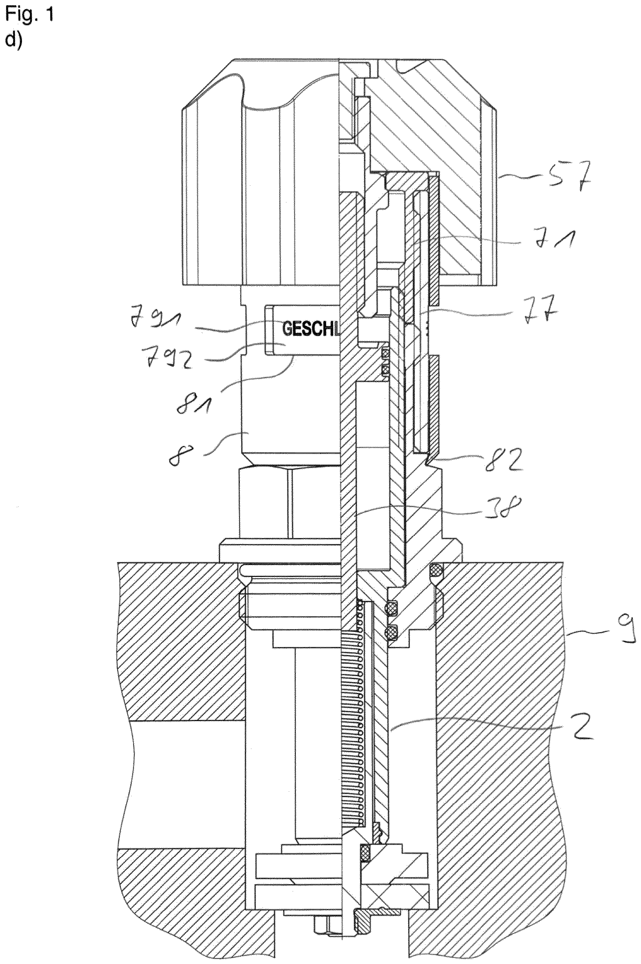

- Figur 1: die schematische Darstellung eines Rückflussverhindererventils im Teillängsschnitt mit angedeuteter Armatur
a) in geöffneter Position (Rückschlagkolben eingefahren);
b) in geschlossener Position (Rückschlagkolben ausgefahren);
c) in einer Zwischenposition (Rückschlagkolben ausgefahren; Druckzylinder nur teilweise ausgefahren);
d) in verschlossener Position (Rückschlagkolben ausgefahren; Druckzylinder ausgefahren);

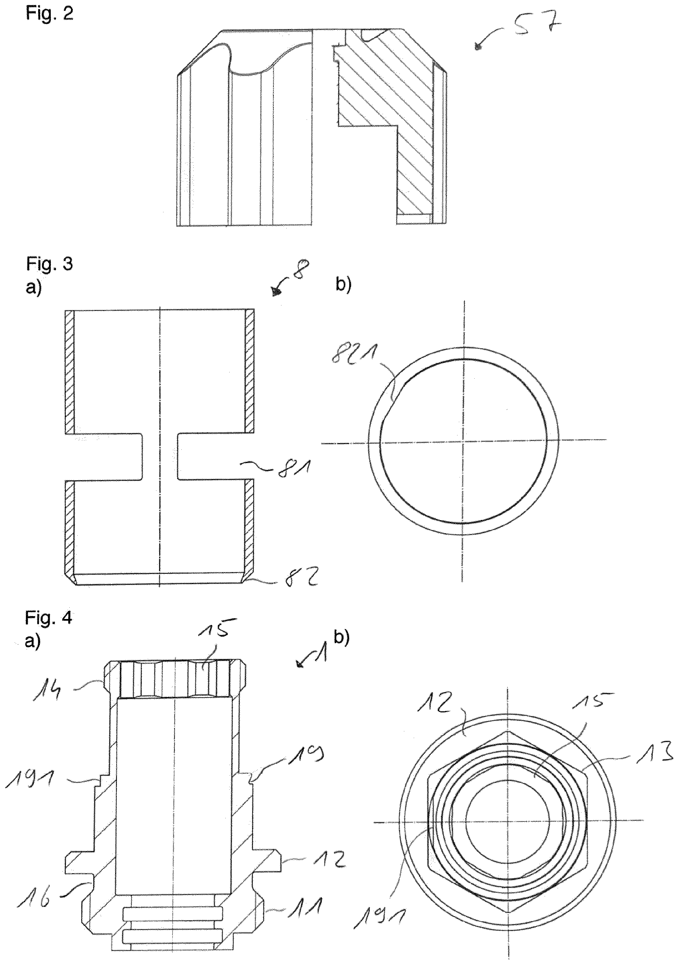

- Figur 2: die räumliche Darstellung des Handgriffs des Rückflussverhindererventils aus Figur 1;
- Figur 3: die Darstellung der Anzeigehülse des Rückflussverhindererventils aus Figur 1
a) im Längsschnitt;
b) in der Draufsicht;
- Figur 4: die Darstellung des Kopfstückes des Rückflussverhindererventils aus Figur 1
a) im Längsschnitt;
b) in der Draufsicht;

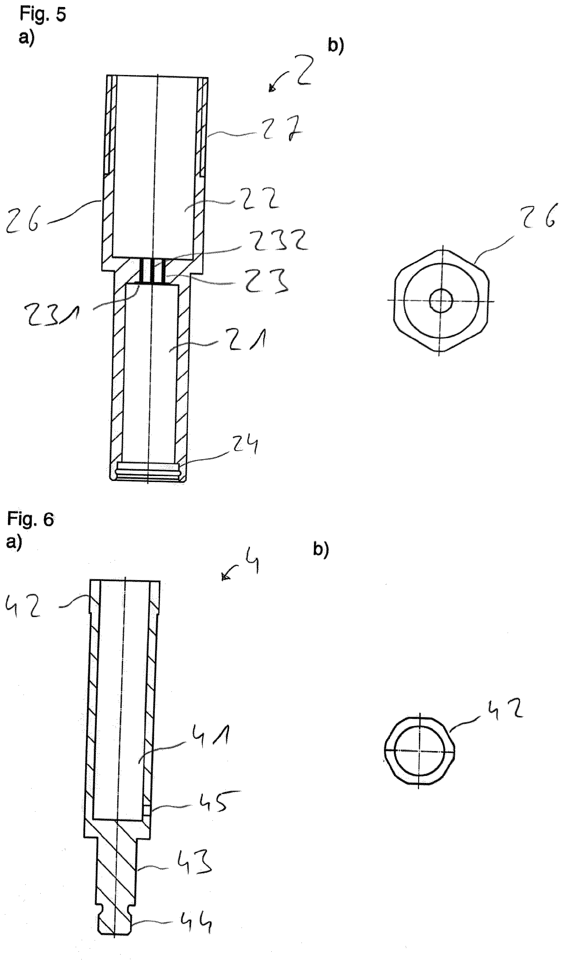

- Figur 5: die Darstellung des Druckzylinders des Rückflussverhindererventils aus Figur 1;
a) im Längsschnitt;
b) in der Draufsicht;
- Figur 6: die Darstellung des Rückschlagkolbens des Rückflussverhindererventils aus Figur 1
a) im Längsschnitt;
b) in der Draufsicht;

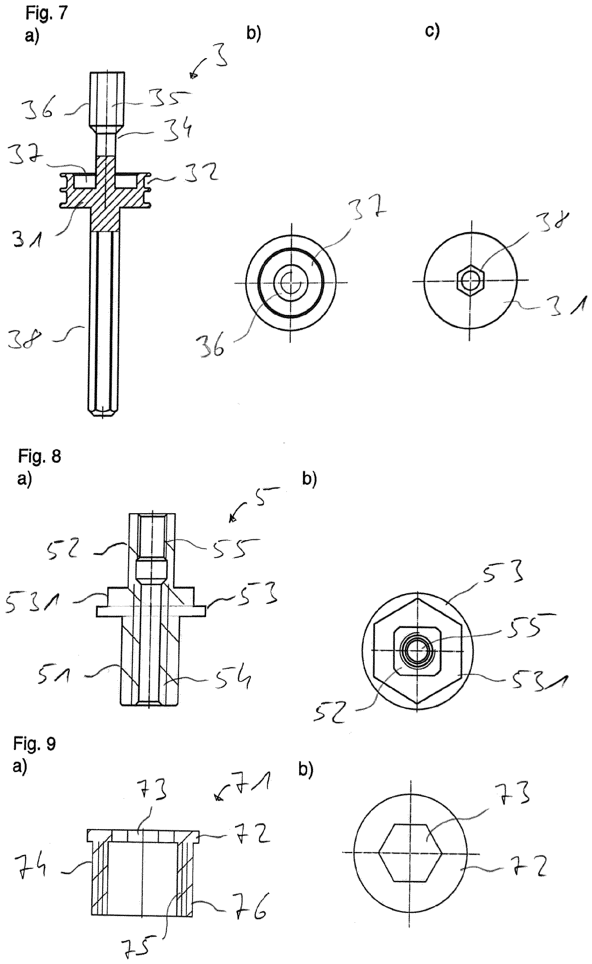

- Figur 7: die Darstellung des Pumpkolbens des Rückflussverhindererventils aus Figur 1
a) im Teilschnitt;
b) in der Draufsicht;
c) in der Ansicht von unten;
- Figur 8: die schematische Darstellung der Spindel des Rückflussverhindererventils aus Figur 1
a) im Längsschnitt;
b) in der Draufsicht;
- Figur 9: die schematische Darstellung des Trägerstücks der Gewindeglocke des Rückflussverhindererventils aus Figur 1
a) im Längsschnitt;
b) in der Draufsicht;

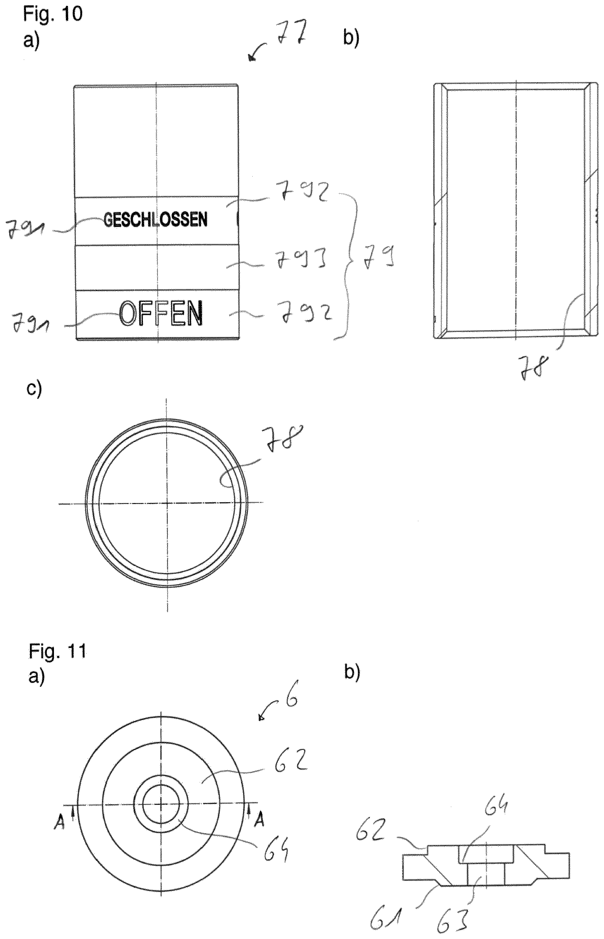

- Figur 10: die Darstellung der Gewindehülse der Gewindeglocke des Rückflussverhindererventils aus Figur 1
a) in räumlicher Darstellung
b) im Längsschnitt;
c) in der Draufsicht;
- Figur 11: die Darstellung der Kegelscheibe des Rückflussverhindererventils aus Figur 1
a) in der Draufsicht;
b) im Längsschnitt A-A;
- Figur 12: die Darstellung der Kragenmutter des Rückflussverhindererventils aus Figur 1
a) in der Draufsicht;
b) im Längsschnitt A-A;
- Figur 13: die Darstellung des Gleitrings des Rückflussverhindererventils aus Figur 1
a) in der Draufsicht;
b) im Längsschnitt A-A;
- Figur 14: die schematische Darstellung eines Absperrventils einer weiteren Ausführungsform im Teillängsschnitt mit angedeuteter Armatur
a) in geöffneter Position (Druckzylinder eingefahren);
b) in einer Zwischenposition (Druckzylinder nur teilweise ausgefahren);
c) in verschlossener Position (Druckzylinder ausgefahren).

Das als Ausführungsbeispiel gewählte Absperrventil ist als Rückflussverhindererventil ausgebildet und besteht im Wesentlichen aus einem Kopfstück 1, das von einem Druckzylinder 2 durchdrungen ist, das einen Pumpkolben 3 aufnimmt und in dem ein Rückschlagkolben 4 angeordnet ist, an dem eine Kegelscheibe 6 befestigt ist, wobei der Druckzylinder 2 und der Pumpkolben 3 über eine Spindel 5 mit einem Handgriff 57 verbunden sind, über die sie axial in dem Kopfstück 1 in zueinander entgegengesetzte Richtungen verschiebbar sind.

Das Kopfstück 1 ist ein weitgehend hohlzylindrisch ausgeführtes Messingdrehteil. An seinem unteren, armaturseitigen Ende ist an dem Kopfstück 1 ein erstes Außengewinde 11 angebracht, welches von einem umlaufenden Kragen 12 begrenzt ist. An den Kragen 12 schließt sich ein Außensechskant 13 an, der in einen außendurchmesserverjüngten Abschnitt übergeht, an dessen Ende ein zweites Außengewinde 14 zur Aufnahme der Gewindehülse 77 der Gewindeglocke 7 eingebracht ist. Im Ausführungsbeispiel ist das Außengewinde 14 als Trapezrechtsgewinde ausgeführt. Im Übergang zu dem außendurchmesserverjüngten Abschnitt ist in dem Kopfstück 1 weiterhin umlaufend eine Rastnut 19 angeordnet, mit der eine Anzeigehülse 8 verrastet ist, die hierzu eine Rastnase 82 aufweist. Zur Verdrehsicherung der Anzeigehülse 8 weist die Rastnut 19 einen unrunden Abschnitt 191, an dem ein an der Rastnase 82 vorhandener unrunder Abschnitt 821 anliegt. Die Anzeigehülse umschließt die Gewindehülse 77 der Gewindeglocke 7 und weist drei jeweils um 120° zueinander versetzt angeordnete Fenster 81 auf.

Innen ist in das Kopfstück 1 in Höhe des zweiten Außengewindes 14 ein Innensechskantkragen 15 zur Führung und Verdrehsicherung des Druckzylinders 2 eingebracht. An seiner dem ersten Außengewinde 11 entgegengesetzten Innenseite sind in das Kopfstück 1 parallel zueinander zwei Nuten 16 zur Aufnahme von O-Ringen 17 eingebracht. Außen ist an dem Kopfstück 1 unterhalb des Kragens 12 ein O-Ring 18 zur Abdichtung gegenüber einer Armatur 9 angeordnet.

Der Druckzylinder 2 ist als im Wesentlichen hohlzylinderförmig ausgebildetes Messingdrehteil ausgeführt und weist einen zylindrischen ersten Kolbenraum 21 und einen diesem gegenüber durchmessererweiterten zylindrischen zweiten Kolbenraum 22 auf, die über einen Durchgangskanal 23 miteinander verbunden sind. Der Durchgangskanal 23 ist an seinem dem ersten Kolbenraum 21 zugewandten Ende mit einer Durchmessererweiterung 231 versehen, in die umlaufend über dessen Innenmantelfläche eingebrachte, axiale über die gesamte Länge verlaufende Kerben 232 münden, wodurch eine verdrehsichernde Führung in Art eines Innensechskants erzielt ist.

Der erste Kolbenraum 21 des Druckzylinders 2 weist an seinem dem Durchgangskanal 23 gegenüberliegenden Ende einen durchmessererweiterten Absatz 24 zur Aufnahme eines Gleitrings 25 auf, über den der Rückschlagkolben 4 in dem ersten Kolbenraum 21 verschiebbar geführt ist. Außen ist an dem Druckzylinder 2 im Bereich des zweiten Kolbenraums 21 ein sechskantförmiger Abschnitt 26 vorhanden, an den sich ein Außengewinde 27 anschließt, das im Ausführungsbeispiel als Trapezlinksgewinde ausgeführt ist. Die Außenkontur des sechskantförmigen Abschnitts 26 entspricht im Wesentlichen der Innenkontur des Innensechskantkragens 15 des Kopfstücks 1, durch den er geführt ist.

Der Pumpkolben 3 weist einen zylindrischen Kolbenabschnitt 31 auf, der außen umlaufend mit zwei beabstandet zueinander angeordneten Nuten 32 versehen ist, in die jeweils ein O-Ring 33 zur Abdichtung gegenüber dem zweiten Kolbenraum 22 des Druckzylinders 2 eingebracht ist. Auf seiner der Spindel 5 zugewandten Seite geht der Kolbenabschnitt 31 zentrisch in eine Antriebsstange 34 über, die endseitig einen durchmessererweiterten Abschnitt 35 aufweist, der mit einem Außengewinde 36 versehen ist, das als Trapezrechtsgewinde ausgebildet ist und über das die Antriebsstange 34 mit der Spindel 5 verbunden ist. Die Antriebsstange 34 umgebend ist in den Kolbenabschnitt 31 eine Ringnut 37 eingebracht. An seiner der Antriebsstange 34 gegenüberliegenden Unterseite geht der Kolbenabschnitt 31 in eine zentrische Führungsstange 38 mit sechseckigem Querschnitt über, mit dem sie in dem Durchgangskanal 23 des Druckzylinders 2 verdrehsicher geführt ist, den sie durchdringt.

Die Spindel 5 ist als im Wesentlichen zylinderförmig ausgebildetes Messingdrehteil ausgeführt. Die Spindel 5 ist unterteilt in einen zylindrischen Abschnitt 51 und einen vierkantförmig ausgebildeten Abschnitt 52, zwischen denen ein umlaufender Kragen 53 angeordnet ist, auf dem ein Sechskantabsatz 531 angeordnet ist. In den zylindrischen Abschnitt 51 ist in die Spindel 5 zentrisch eine erste axiale Gewindebohrung 54 eingebracht, die im Ausführungsbeispiel ein Trapezrechtsgewinde aufweist, in das die Antriebsstange 34 des Pumpkolbens 3 mit ihrem Außengewinde 36 eingreift. In den vierkantförmigen Abschnitt 52 ist zentrisch eine zweite axiale Gewindebohrung 55 eingebracht, die ein metrisches Innengewinde aufweist. Die Gewindebohrung 55 dient der Aufnahme einer Schraube 56 zur Befestigung des auf den Vierkantabschnitt 52 aufgesteckten Handgriffs 57.

Zwischen Druckzylinder 2 und Handgriff 57 ist auf die Spindel 5 eine Gewindeglocke 7 aufgebracht. Die Gewindeglocke 7 ist im Ausführungsbeispiel gebildet aus einem Trägerstück 71 und einer Gewindehülse 77. Das Trägerstück 71 ist als im Wesentlichen topfförmiges Messingdrehteil ausgebildet und weist eine kreisrunde Scheibe 72 auf, auf der ein hohlzylindrischer Ansatz 74 angeordnet ist, den sie umlaufend überragt. In die Scheibe 72 ist eine sechskantförmige Ausnehmung 73 eingebracht, mit der das Trägerstück 71 der Gewindeglocke 7 auf dem Sechskantabschnitt 531 des Kragens 53 der Spindel 5 aufliegt. Die Gewindeglocke 7 ist so formschlüssig mit der Spindel 5 verbunden.

Der Ansatz 74 ist innen mit einen ersten Innengewinde 75 versehen, das zum Eingriff mit dem Außengewinde 27 des Druckzylinders 2 als Trapezlinksgewinde ausgebildet ist. Außen weist der Ansatz 74 ein als Trapezrechtsgewinde ausgeführtes Außengewinde 76 auf. Die Gewindehülse 77 ist als hohlzylindrisches Messingdrehteil ausgebildet und mit einen zweiten Innengewinde 78 versehen, das als Trapezrechtsgewinde ausgebildet ist. Die Gewindehülse 77 ist mit ihrem zweiten Innengewinde 78 auf das Außengewinde 76 des Ansatzes 74 des Trägerstücks 71 aufgeschraubt und mit diesem verklebt, wobei es den Ansatz 74 des Trägerstücks 71 etwa mit seiner halben Länge axial überragt. Alternativ zur Verklebung ist auch eine thermische und/oder mechanische nicht lösbare Verbindung von Trägerstück 71 und Gewindehülse 72 möglich. Außen sind auf der Gewindehülse zwei Anzeigeflächen 79 angeordnet, die mit Markierungen 791 versehen sind. Im Ausführungsbeispiel sind die Markierungen 791 durch die Worte "OFFEN" und "GESCHLOSSEN" ausgeführt, die jeweils mit einem grünen Farbstreifen 792 hinterlegt sind. Zwischen den Markierungen ist ein weiterer, roter Farbstreifen 793 angeordnet.

Die so gebildete Gewindeglocke 7 weist axial und radial versetzt zueinander ein erstes, als Trapezlinksgewinde ausgebildetes, erstes Innengewinde 75 zum Eingriff mit dem Außengewinde 27 des Druckzylinders 2 und ein als Trapezrechtsgewinde ausgebildetes, zweites Innengewinde 78 zum Eingriff mit dem zweiten Außengewinde 14 des Kopfstücks 1 auf. Durch eine Drehung der Spindel 5 über den Handgriff 57 ist so eine axiale Bewegung des Druckzylinders 2 entlang der Gewindeglocke 7 sowie der Gewindeglocke 7 entlang des Kopfstücks 1 in dieselbe Richtung bewirkt. Die auf den Anzeigeflächen 79 der Gewindehülse 77 angeordneten Markierungen 791 sind so über die Fenster 81 bewegbar.

Der Rückschlagkolben 4 ist im Wesentlichen als zylinderförmiges Messingdrehteil ausgeführt. An seinem dem Durchgangskanal 23 des Druckzylinders 2 zugewandten Ende ist in den Rückschlagkolben 4 axial eine Sackbohrung 41 zur Aufnahme einer Feder 8 eingebracht. An seinem der Spindel 5 zugewandten Ende ist an den Rückschlagkolben 4 außen ein Außenvielkant 42 angeordnet. Zwischen dem Rückschlagkolben 4 und dem zylindrischen ersten Kolbenraum 21 ist so ein Zwischenraum für den Durchtritt von Wasser gebildet. An seinem dem Außenvielkant 42 entgegengesetzten Ende weist der Rückschlagkolben 4 einen Stift 43 zur Aufnahme der Kegelscheibe 6 auf, der endseitig in einen Gewindekopf 44 übergeht.

Die Außenmantelfläche des Rückschlagkolbens 4 ist in dem gesamten innerhalb des ersten Kolbenraums 21 des Druckzylinders 2 axial verschiebbaren Bereich, das heißt von dem Außenvielkant 42 bis zum Stift 43, mit einer Teflonschicht versehen. Alternativ kann der Rückschlagkolben 4 auch aus einem nicht korrodierenden Material wie beispielsweise Edelstahl hergestellt sein. Im Bereich der Sackbohrung 41 sind in den Rückschlagkolben 4 Druckausgleichsbohrungen 45 eingebracht, die dem Eintritt oder dem Austritt von Wasser bei Bewegung des Rückschlagkolbens 4 innerhalb des ersten Kolbenraumes 21 dienen. Die Druckausgleichsbohrungen 45 münden in dem zwischen dem Rückschlagkolben 4 und dem zylindrischen ersten Kolbenraum 21 gebildeten Zwischenraum.

Auf dem Stift 43 des Rückschlagkolbens 4 ist die Kegelscheibe 6 aufgeschoben. Die Kegelscheibe 6 ist im Ausführungsbeispiel als Messingdrehteil ausgeführt. An ihrer dem Kopfstück 1 abgewandten Seite ist an die Kegelscheibe 6 ein kegelförmiger Absatz 61 angeordnet. Auf ihrer dem kegelförmigen Absatz 61 gegenüberliegenden Seite weist die Kegelscheibe 6 einen durchmesserreduzierten Abschnitt 62 auf. Zentrisch ist die Kegelscheibe 6 mit einer Stufenbohrung 63 versehen, welche im Bereich des Übergangs zum durchmesserreduzierten Abschnitt 62 durchmessererweitert ausgebildet ist, wodurch ein Absatz 64 zur Aufnahme eines O-Rings 65 gebildet ist.

Auf den kegelförmigen Absatz 61 der Kegelscheibe 6 ist eine Dichtscheibe 66 aufgelegt und Kegelscheibe 6 und Dichtscheibe 66 sind mittels einer Kragenmutter 46, die auf den Gewindekopf 44 des Stiftes 43 aufgeschraubt ist, an dem Rückschlagkolben 4 befestigt. Die Kegelscheibe 6 ist über den O-Ring 65 gegenüber dem Stift 43 des Rückschlagkolbens 4 abgedichtet.

In montiertem Zustand ist die Spindel 5 mit ihrer ersten Gewindebohrung 54 auf das Außengewinde 36 der Antriebsstange 34 des Pumpkolbens 3 aufgeschraubt, der in den zweiten Kolbenraum 22 des Druckzylinders eingesetzt ist, wobei sein Kolbenabschnitt 31 über die O-Ringe 33 gegenüber dem zweiten Kolbenraum 22 abgedichtet ist und seine Führungsstange 38 durch den Durchgangskanal 23 des Druckzylinders 2 in den ersten Kolbenraum 21 hineinragt. Auf den Kragen 53 der Spindel 5 ist die Gewindeglocke 7 aufgesteckt, die auf dem Kragen 53 aufliegt, wobei der Sechskantabsatz 531 des Kragens in die sechskantförmige Ausnehmung 73 der Scheibe 72 eingreift, wodurch die Gewindeglocke 7 und mit der Spindel 5 formschlüssig verbunden ist. Auf den Vierkantabschnitt 52 der Spindel 5 ist der Handgriff 57 aufgesteckt und über die Schraube 56, die in die zweite Gewindebohrung 55 der Spindel 5 eingeschraubt ist, mit dieser verbunden. Die Gewindeglocke 7, die über das Handrad 57 auf der Spindel 5 axial fixiert ist, ist mit ihrem ersten Innengewinde 75 mit dem Außengewinde 27 des Druckzylinders 2 und mit ihrem zweiten Innengewinde 78 mit dem zweiten Außengewinde 14 des Kopfstücks 1 im Eingriff.

Der Rückschlagkolben 4 ist mit seinem Außenvielkant 42 in den zylindrischen ersten Kolbenraum 21 des Druckzylinders 2 eingeschoben, wobei in den Rückschlagkolben 4 eine Feder 47 eingebracht ist, die als Druckspiralfeder ausgebildet ist und die mit ihrem anderen Ende an dem Grund des ersten Kolbenraums 21 des Druckzylinders 2 die Durchmessererweiterung 231 des Durchgangskanals 23 umgebend anliegt, gegen den sie vorgespannt ist. Die Führungsstange 38 ragt in die Sackbohrung 41 des Rückschlagkolbens 4 und die in diesem angeordnete Feder 47 ein. Der Rückschlagkolben 4 ist in dem Druckzylinder 2 über den Gleitring 25 geführt, der zum Wasserdurchtritt für einen Druckausgleich einen Druckausgleichsspalt 251 aufweist.

Der Druckzylinder 2 ist über die beiden O-Ringe 17 gegenüber dem Kopfstück 1 abgedichtet, das mit seinem ersten Außengewinde 11 in eine - in den Figuren lediglich schematisch dargestellte - Armatur 9 eingeschraubt ist. Das Kopfstück 1 ist über den O-Ring 18 gegenüber der Armatur 9 abgedichtet.

Die Armatur 9 umfasst einen Wasserzulauf 91 und einen Wasserablauf 93. Der Wasserzulauf 91 weist einen Anschlag 92 auf, an dem die an dem Rückschlagkolben 4 befestigte Dichtscheibe 66 anliegt. Der Rückschlagkolben 4 ist dabei über die Feder 47 gegen den Anschlag 92 vorgespannt. Dabei strömt kein Wasser vom Wasserzulauf 91 zum Wasserablauf 93.

In Figur 1a ist die Gewindeglocke 7 und der Druckzylinder 2 des Rückflussverhindererventils über den mit den Spindel 5 formschlüssig verbundenen Handgriff 57 in die oberste Position verbracht, wobei die grün hinterlegten Markierungen 791 "OFFEN" der Gewindehülse 77 durch die Fenster 81 der Anzeigehülse 8 sichtbar sind. In dieser Position liegt der Kolbenabschnitt 31 des Pumpkolbens 3 auf dem Grund des zweiten Kolbenraums 22 des Druckzylinders 2 auf und die Führungsstange 38 ragt weit in die Sackbohrung 41 des Rückschlagkolbens 4 und die in diesem angeordnete Feder 8 ein. Zugleich ist der maximale Abstand zwischen Druckzylinder 2 und Kegelscheibe 6 erreicht. In dem Wasserzulauf 91 und dem Wasserablauf 93 liegt ein identischer Druck p an. Das Wasser strömt vom Wasserzulauf 91 in Richtung des Wasserablaufs 93.

In der Stellung des Rückflussverhindererventils gemäß Figur 1b fließt kein Wasser vom Wasserzulauf 91 in Richtung Wasserablauf 93; der Rückschlagkolben 4 ist über die Feder 47 gegen den Anschlag 92 vorgespannt. Am Wasserzulauf 91 und am Wasserablauf 93 liegt ein identischer Druck p an. Die Gewindehülse 77 befindet sich weiterhin in der obersten Position; die grün hinterlegten Markierungen 791 "OFFEN" sind weiterhin durch die Fenster 81 der Anzeigehülse 8 sichtbar.

Ist der Wasserablauf 93 versperrt, beispielsweise über ein - nicht dargestelltes - Absperrventil im Zuge eines Wechsels einer Wasseruhr, steigt der Druck p im Wasserablauf 93 an. Bei einer Bewegung des Druckzylinders 2 durch Drehung der Spindel 5 über das Handrad 57 in Richtung der Kegelscheibe 6 zum Versperren des Wasserzulaufs 91 wird durch den zum Gewindeeingriff zwischen Gewindeglocke 7 und Druckzylinder 2 gegenläufigen Gewindeeingriff zwischen Spindel 5 und Antriebsstange 34 zugleich der Kolbenabschnitt 31 des Pumpkolbens 3 nach oben in Richtung Spindel 5 bewegt. Die Gewindeglocke 7 bewegt sich zugleich in Richtung der Kegelscheibe 6, wobei die auf den Anzeigeflächen 79 der Gewindehülse 77 angeordneten auf grünen Farbstreifen 792 hinterlegten Markierungen 791 "OFFEN" aus dem Bereich der Fenster 81 der Anzeigehülse 8 bewegt werden, wonach zwischen den Markierungen 791 befindliche rote Farbstreifen793 im Sichtbereich der Fenster 81 erscheint (vgl. Figur 1c). In der Position der Gewindeglocke 7, wo der Druckzylinder 2 an der Kegelscheibe 6 anliegt, haben die wiederum auf grünen Farbstreifen 792 hinterlegten Markierungen 791 "GESCHLOSSEN" den Bereich der Fester 81 der Anzeigehülse 8 erreicht (vgl. Figur 1d).

Durch die Bewegung des Kolbenabschnitts 31 des Pumpkolbens 3 nach oben in Richtung Spindel 5 wird das durch den Druckzylinder 2 verdrängte Wasser durch den Druckausgleichsspalt 251 des Gleitrings 25 über den zwischen Rückschlagkolben 4 und erstem Kolbenraum 21 gebildeten Zwischenraum durch den Durchgangskanal 23 hindurch in den zweiten Kolbenraum 22 gesaugt. Durch die in dem Kolbenabschnitt 31 angeordnete Ringnut 37 ist das in dem zweiten Kolbenraum 22 hierfür zur Verfügung stehende Volumen maximiert. Durch die Durchmessererweiterung 231 des Durchgangskanals 23 ist sichergestellt, dass ein Wasserfluss um die durch den Durchgangskanal 23 geführte Führungsstange 38 herum jederzeit gewährleistet ist. Der in dem Wasserablauf 93 vorhandene Druck p bleibt so annähernd konstant. Der durch die Herausbewegung des Rückschlagkolbens 4 aus dem ersten Kolbenraum 21 bewirkte Unterdruck in der Sackbohrung 41 wird durch die in dieser angeordnete Druckausgleichsbohrung 45 ausgeglichen.

Wird bei einer gegenläufigen Bewegung des Handrades der Druckzylinders 2 zur Freigabe des Wasserzulaufs 91 in Richtung der Spindel 5 bewegt, so wird zugleich der Kolbenabschnitt 31 des Pumpkolbens 3 nach unten in Richtung des Grundes des zweiten Kolbenraums 22 bewegt, wodurch das hier befindliche Wasser durch den Durchgangskanal 23 über den zwischen Rückschlagkolben 4 und erstem Kolbenraum 21 gebildeten Zwischenraum durch den Druckausgleichsspalt 251 des Gleitrings 25 hindurch in den Wasserablauf gedrückt wird. Der in dem Wasserablauf 93 vorhandene Druck p bleibt so wiederum annähernd konstant. Der durch die Hineinbewegung des Rückschlagkolbens 4 in den ersten Kolbenraum 21 bewirkte Überdruck in der Sackbohrung 41 wird wiederum durch die in dieser angeordnete Druckausgleichsbohrung 45 ausgeglichen. Durch die entgegengerichtete Bewegung der Gewindeglocke 7 werden die auf der Anzeigefläche 79 der Gewindehülse 77 befindlichen Markierungen 791 wiederum hinter der Anzeigehülse 8 bewegt, bis in der oberen Position die grün hinterlegten Markierungen "OFFEN" im Bereich der Fenster 81 der Anzeigehülse erscheinen.

Die durch die Anzeigeflächen 79 mit Markierungen 791 der Gewindehülse 77 der Gewindeglocke 7 und die Fenster 81 der Anzeigehülse 8 gebildete Anzeigevorrichtung ist unmittelbar ersichtlich, ob sich der Druckzylinder in einer der Endstellungen "OFFEN" oder "GESCHLOSSEN" befindet. In einer - unerwünschten - Zwischenposition des Druckzylinders erscheint der zwischen den grün hinterlegten Markierungen 791 angeordnete rote Farbstreifen unmittelbar alarmierend in den Fenstern 81 der Anzeigehülse.

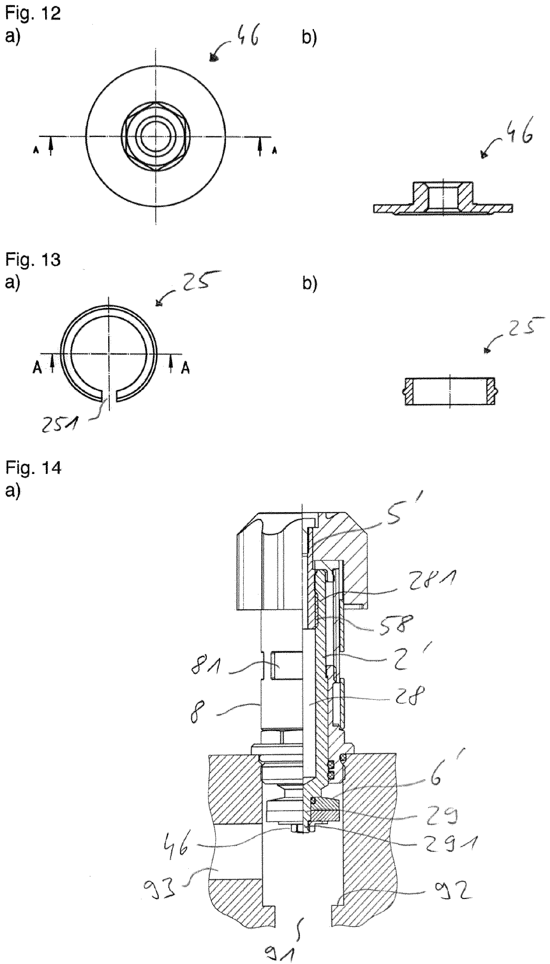

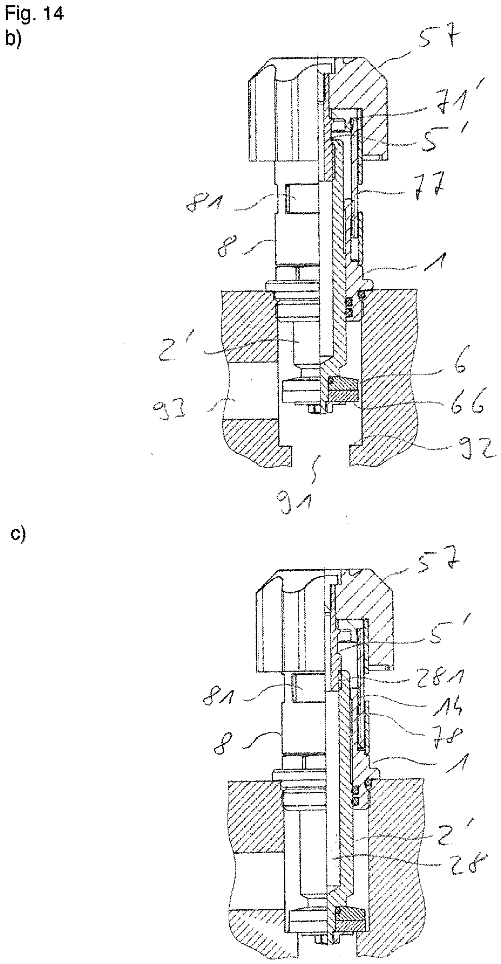

Im Ausführungsbeispiel gemäß Figur 14 ist das Absperrventil nicht als Rückflussverhindererventil ausgebildet und weist einen einfacheren Aufbau auf. In Bezug auf das zuvor beschriebene Ausführungsbeispiel gleiche oder entsprechende Bauteile sind hier mit gleichen Bezugszeichen versehen. Das Absperrventil besteht hier lediglich im Wesentlichen aus einem Kopfstück 1, das von einem Druckzylinder 2' durchdrungen ist, an dem eine Kegelscheibe 6' befestigt ist, an die sich eine Dichtscheibe 66 anschließt, wobei der Druckzylinder 2' über eine Spindel 5' mit einem Handgriff 57 verbunden ist, über die er axial in dem Kopfstück 1 verschiebbar ist.

Das Kopfstück 1 ist entsprechend dem zuvor beschriebenen Ausführungsbeispiel ausgebildet wobei dieses wiederum eine Rastnut 19 aufweist, mit der eine Anzeigehülse 8 verrastet ist, die hierzu eine Rastnase 82 aufweist.

Der Druckzylinder 2' ist als im Wesentlichen zylinderförmig ausgebildetes Messingdrehteil ausgeführt weist entlang seiner Längsmittelachse eine Sackbohrung 28 auf, die mit einem Innengewinde 281 versehen ist. Außen ist an dem Druckzylinder 2' wiederum ein sechskantförmiger Abschnitt 26 vorhanden, dessen Außenkontur im Wesentlichen der Innenkontur des Innensechskantkragens 15 des Kopfstücks 1 entspricht, durch den er geführt ist. An seinem der Sackbohrung 28 gegenüberliegenden Ende weist der Druckzylinder 2' einen Stift 29 zur Aufnahme der Kegelscheibe 6' und der Dichtscheibe 66 auf, der endseitig in einen Gewindekopf 291 übergeht, auf den eine Kragenmutter 46 aufgeschraubt ist.

Die Spindel 5' entspricht weitgehend der Spindel 5 des zuvor beschriebenen Ausführungsbeispiels. Jedoch ist in den zylindrischen Abschnitt 51 keine axiale Gewindebohrung 54 eingebracht. Vielmehr ist dieser Abschnitt außen mit einem Außengewinde 58 zum Eingriff in das Innengewinde 281 des Druckzylinders 2' versehen. Auf den Vierkantabschnitt 52 ist wiederum ein Handgriff 57 aufgesteckt.

Zwischen Druckzylinder 2' und Handgriff 57 ist auf die Spindel 5' wiederum eine Gewindeglocke 7 aufgebracht, die aus einem Trägerstück 71 ` und einer Gewindehülse 77 gebildet ist und die in der zuvor beschriebenen Art und Weise formschlüssig mit der Spindel 5' verbunden ist. Entgegen dem zuvor beschriebenen Ausführungsbeispiel weist der Ansatz des Trägerstücks 71 ` jedoch kein Innengewinde auf. Außen sind auf der Gewindehülse 77 wiederum zwei Anzeigeflächen 79 angeordnet, die mit Markierungen 791 versehen sind. Im Ausführungsbeispiel sind die Markierungen 791 durch die Worte "OFFEN" und "GESCHLOS-SEN" ausgeführt, die jeweils mit einem grünen Farbstreifen 792 hinterlegt sind. Zwischen den Markierungen ist ein weiterer, roter Farbstreifen 793 angeordnet. Die Gewindehülse 77 der Gewindeglocke 7 ist wiederum von der Anzeigehülse 8 umschlossen, die drei jeweils um 120° zueinander versetzt angeordnete Fenster 81 aufweist.

Durch eine Drehung der Spindel 5' über das Handgriff 57 ist wiederum eine axiale Bewegung des Druckzylinders 2' entlang der Gewindeglocke 7 sowie der Gewindeglocke 7 entlang des Kopfstücks 1 in dieselbe Richtung bewirkt. Die auf den Anzeigeflächen 79 der Gewindehülse 77 angeordneten Markierungen 791 sind so über die Fenster 81 bewegbar.

Bei einer Drehung der Spindel 5' über das Handrad 57 zum Versperren des Wasserzulaufs 91 wird durch den Gewindeeingriff zwischen Spindel 5' und Druckzylinder 2' der Druckzylinders 2' in Richtung der Kegelscheibe 6 bewegt. Die Gewindeglocke 7 bewegt sich zusammen mit der Spindel 5' zugleich in Richtung der Kegelscheibe 6`, wobei die auf den Anzeigeflächen 79 der Gewindehülse 77 angeordneten auf grünen Farbstreifen 792 hinterlegten Markierungen 791 "OFFEN" aus dem Bereich der Fenster 81 der Anzeigehülse 8 bewegt werden, wonach zwischen den Markierungen 791 befindliche rote Farbstreifen793 im Sichtbereich der Fenster 81 erscheint (vgl. Figur 14 b). In der Position der Gewindeglocke 7, wo der Druckzylinder 2' mit der Dichtscheibe 66 an dem Anschlag 92 der Armatur 9 anliegt, haben die wiederum auf grünen Farbstreifen 792 hinterlegten Markierungen 791 "GESCHLOSSEN" den Bereich der Fester 81 der Anzeigehülse 8 erreicht (vgl. Figur 14 c).

## Patentansprüche

1. Absperrventil, mit einem Kopfstück (1), in dem ein Druckzylinder (2) angeordnet ist, der mit einer Spindel (5) verbunden ist, über deren Drehung der Druckzylinder (2) in dem Kopfstück verschiebbar ist sowie einer Dichtanordnung, die über den Druckzylinder (2) gegen den Ventilsitz einer Armatur (9) pressbar ist, **dadurch gekennzeichnet, dass** der Druckzylinder (2) mit wenigstens einer Anzeigefläche (79) verbunden ist, die derart mit dem Druckzylinder (2) gekoppelt ist, dass sie in Axialrichtung eine zu dem Druckzylinder (2) proportionale Bewegung aufweist, wobei eine die Anzeigefläche (79) umgebende Anzeigehülse (8) angeordnet ist, die wenigstens ein Fenster (81) aufweist, das von der Anzeigefläche (79) in Axialrichtung überfahrbar ist.

2. Absperrventil nach Anspruch 1, **dadurch gekennzeichnet, dass** dieses als Rückflussverhindererventil ausgebildet ist, wobei der Druckzylinder (2) einen Rückschlagkolben (4) aufnimmt, der in einem ersten Kolbenraum (21) des Druckzylinders (2) verschiebbar angeordnet ist und der endseitig mit einer Dichtanordnung versehen ist.

3. Absperrventil nach Anspruch 1 oder 2, **dadurch gekennzeichnet, dass** die Spindel (5) drehfest mit einer Gewindeglocke (7) verbunden ist, auf der die wenigstens eine Anzeigefläche (79) angeordnet ist und die ein erstes Innengewinde (75) aufweist, das mit einem außen an dem Kopfstück (1) angeordneten Außengewinde (14) im Eingriff ist, wobei in der Gewindeglocke (7) axial vor dem ersten Innengewinde (75) ein innendurchmesserreduzierter Abschnitt angeordnet ist, der ein zweites Innengewinde (78) aufweist, das mit einem außen an dem Druckzylinder (2) angeordneten Außengewinde (27) im Eingriff ist, wobei vorzugsweise das erste Innengewinde (75) ein Rechtsgewinde und das zweite Innengewinde (78) ein Linksgewinde ist.

4. Absperrventil nach Anspruch 3, **dadurch gekennzeichnet, dass** die Gewindeglocke (7) aus einem topfförmigen Trägerstück (71) gebildet ist, das einen hohlzylindrischen Ansatz (74) aufweist, der das zweite Innengewinde (78) aufweist und der mit einem Außengewinde (76) versehen ist, auf das eine dieses in der Länge überragende Gewindehülse (77) aufgeschraubt und verklebt ist, die das erste Innengewinde (75) aufweist.

5. Absperrventil nach Anspruch 3 oder 4, **dadurch gekennzeichnet, dass** die Anzeigehülse (8) die Gewindeglocke (7) umgebend außen an dem Kopfstück (1) fixiert ist.

6. Absperrventil nach Anspruch 5, **dadurch gekennzeichnet, dass** die Anzeigehülse (8) eine Rastnase (82) aufweist, mit der sie auf eine an dem Kopfstück (1) hierzu angeordnete Rastnut (19) verrastet ist.

7. Absperrventil nach einem der vorgenannten Ansprüche, **dadurch gekennzeichnet, dass** die wenigstens eine Anzeigefläche (79) wenigstens eine die "Offen-Stellung" kennzeichnende und eine die "Geschlossen-Stellung" kennzeichnende Markierung (791) aufweist.

8. Absperrventil nach einem der vorgenannten Ansprüche, **dadurch gekennzeichnet, dass** auf der Spindel (5) ein Handgriff (57) angeordnet und mit dieser drehfest verbunden ist, in das die Anzeigehülse (8) hineinragt.

9. Absperrventil nach einem der vorgenannten Ansprüche, **dadurch gekennzeichnet, dass** der Druckzylinder (2) eine Druckausgleichspumpe umfasst, die durch einen zweiten Kolbenraum (22) des Druckzylinders (2) gebildet ist, der über einen Durchgangskanal (23) mit dem ersten Kolbenraum (21) verbunden ist und in dem ein Pumpkolben (3) verschiebbar angeordnet ist, der über einen Gewindeeingriff mit der Spindel (5) verbunden ist, über deren Drehung er verschiebbar ist.

10. Absperrventil nach Anspruch 9, **dadurch gekennzeichnet, dass** der Pumpkolben (3) eine Führungsstange (38) aufweist, die durch den Durchgangskanal (23) hindurchragt

11. Absperrventil nach Anspruch 9 oder 10, **dadurch gekennzeichnet, dass** der Rückschlagkolben (4) in dem ersten Kolbenraum (21) über einen Gleitring (25) geführt ist, der mit einem Druckausgleichsspalt (251) versehen ist.

12. Absperrventil nach Anspruch 10 oder 11, **dadurch gekennzeichnet, dass** der Rückschlagkolben (4) eine axiale Sackbohrung (41) aufweist, in welche die Führungsstange (38) in einer in den ersten Kolbenraum (21) eingefahrenen Position des Rückschlagkolbens (4) eingreift, wobei in den Rückschlagkolben (4) bevorzugt eine radiale Druckausgleichsbohrung (45) eingebracht ist, die in der axialen Sackbohrung (41) mündet.

13. Absperrventil nach Anspruch 12 **dadurch gekennzeichnet, dass** in der axialen Sackbohrung (41) des Rückschlagkolbens (4) eine Feder (47) angeordnet ist, die gegen den Druckzylinder (2) vorgespannt ist.

14. Absperrventil nach einem der Ansprüche 9 bis 13, **dadurch gekennzeichnet, dass** der Pumpkolben (3) eine Antriebsstange (34) aufweist, die mit der Spindel (5) im Gewindeeingriff ist, wobei die Antriebsstange (34) vorzugsweise ein Außengewinde (36) aufweist, das in eine in der Spindel (5) eingebrachte Gewindebohrung (54) eingreift.

15. Absperrventil nach Anspruch 1, **dadurch gekennzeichnet, dass** der Druckzylinder (2') eine Sackbohrung (28) aufweist, die mit einem Innengewinde (281) versehen ist, in das ein hierzu an der Spindel (5') endseitig angeordnetes Außengewinde (58) eingreift.

## Claims

1. Shut-off valve, with a head piece (1), in which a pressure cylinder (2) is arranged, which is connected to a spindle (5), via the rotation of which the pressure cylinder (2) is displaceable in the head piece, as well as a sealing arrangement, which can be pressed via the pressure cylinder (2) against the valve seat of a fitting (9), **characterised in that** the pressure cylinder (2) is connected to at least one indicator surface (79), which is coupled to the pressure cylinder (2) in such a manner that it has a motion proportional to the pressure cylinder (2) in the axial direction, wherein an indicator sleeve (8) surrounding the indicator surface (79) is arranged, which has at least one window (81), which can be traversed by the indicator surface (79) in the axial direction.

2. Shut-off valve according to claim 1, **characterised in that** it is designed as a backflow preventer valve, wherein the pressure cylinder (2) receives a non-return piston (4), which is displaceably arranged in a first piston chamber (21) of the pressure cylinder (2) and which is provided at the end with a sealing arrangement.

3. Shut-off valve according to claim 1 or 2, **characterised in that** the spindle (5) is non-rotatably connected to a threaded bell (7), on which the at least one indicator surface (79) is arranged and which has a first internal thread (75), which engages with an external thread (14) arranged on the outside of the head piece (1), wherein a section of reduced inner diameter is arranged in the threaded bell (7) axially in front of the first internal thread (75), which section has a second internal thread (78), which engages with an external thread (27) arranged on the outside of the pressure cylinder (2), wherein preferably the first internal thread (75) is a right-hand thread and the second internal thread (78) is a left-hand thread.

4. Shut-off valve according to claim 3, **characterised in that** the threaded bell (7) is formed by a cup-shaped carrier piece (71), which has a hollow-cylindrical extension (74), which has the second internal thread (78) and which is provided with an external thread (76), onto which is screwed and bonded a threaded sleeve (77) projecting beyond it in length, which has the first internal thread (75).

5. Shut-off valve according to claim 3 or 4, **characterised in that** the indicator sleeve (8) is fixed to the outside of the head piece (1) surrounding the threaded bell (7).

6. Shut-off valve according to claim 5, **characterised in that** the indicator sleeve (8) has a latching lug (82), with which it is latched onto a latching groove (19) arranged on the head piece (1) for this purpose.

7. Shut-off valve according to one of the previous claims, **characterised in that** the at least one indicator surface (79) has at least one marking (791) indicating the "open position" and one marking (791) indicating the "closed position".

8. Shut-off valve according to one of the previous claims, **characterised in that** a handle (57) is arranged on the spindle (5) and non-rotatably connected thereto, into which the indicator sleeve (8) projects.

9. Shut-off valve according to one of the previous claims, **characterised in that** the pressure cylinder (2) comprises a pressure compensation pump, which is formed by a second piston chamber (22) of the pressure cylinder (2), which is connected to the first piston chamber (21) via a passage channel (23) and in which a pump piston (3) is displaceably arranged, which is connected via a threaded engagement to the spindle (5), via the rotation of which it is displaceable.

10. Shut-off valve according to claim 9, **characterised in that** the pump piston (3) has a guide rod (38), which projects through the passage channel (23).

11. Shut-off valve according to claim 9 or 10, **characterised in that** the non-return piston (4) is guided in the first piston chamber (21) via a sliding ring (25), which is provided with a pressure compensation gap (251).

12. Shut-off valve according to claim 10 or 11, **characterised in that** the non-return piston (4) has an axial blind bore (41), in which the guide rod (38) engages in a position of the non-return piston (4) retracted into the first piston chamber (21), wherein preferably a radial pressure compensation bore (45) is introduced in the non-return piston (4), which opens into the axial blind bore (41).

13. Shut-off valve according to claim 12, **characterised in that** a spring (47) is arranged in the axial blind bore (41) of the non-return piston (4), which is pretensioned against the pressure cylinder (2).

14. Shut-off valve according to one of claims 9 to 13, **characterised in that** the pump piston (3) has a drive rod (34), which is in threaded engagement with the spindle (5), wherein the drive rod (34) preferably has an external thread (36), which engages in a threaded bore (54) in the spindle (5).

15. Shut-off valve according to claim 1, **characterised in that** the pressure cylinder (2') has a blind bore (28), which is provided with an internal thread (281), in which an external thread (58) arranged at the end of the spindle (5') for this purpose engages.

## Revendications

1. Robinet à soupape d'arrêt, comprenant une partie têtière (1) dans laquelle est disposé un cylindre de compression (2) qui est relié avec une broche (5) via la rotation de laquelle le cylindre de compression (2) est déplaçable dans la partie têtière, comprenant également un dispositif d'étanchéité compressible via le cylindre de compression (2) contre le siège de soupape d'une robinetterie (9), **caractérisé en ce que** le cylindre de compression (2) est relié à au moins une surface d'affichage (79), surface qui est couplée avec le cylindre de compression (2) de sorte à exécuter en direction axiale un mouvement proportionnel au cylindre de compression (2), sachant qu'est disposée une douille d'affichage (8) entourant la surface d'affichage (79), douille qui présente au moins un hublot (81) franchissable par la surface d'affichage (79) en direction axiale.

2. Robinet à soupape d'arrêt selon la revendication 1, **caractérisé en ce que** ce robinet est configuré comme une soupape antiretour, sachant que le cylindre de compression (2) reçoit un piston antiretour (4) disposé de façon à pouvoir se déplacer dans un premier volume (21) de piston du cylindre de compression (2) et qui est muni en son extrémité d'un dispositif d'étanchéité.

3. Robinet à soupape d'arrêt selon la revendication 1 ou 2, **caractérisé en ce que** la broche (5) est reliée sans pouvoir tourner à une cloche filetée (7) sur laquelle est disposée au moins une surface d'affichage (79) et qui présente un premier filetage intérieur (75) qui engrène dans un filetage extérieur (14) disposé à l'extérieur contre la partie têtière (1), sachant que dans la cloche filetée (7) est disposé axialement, devant le premier filetage intérieur (75), un segment d'un diamètre intérieur réduit, qui présente un deuxième filetage intérieur (78) engrenant dans un filetage extérieur (27) disposé à l'extérieur contre le cylindre de compression (2), sachant que de préférence le premier filetage intérieur (75) est un filetage avec pas à droite, et le deuxième filetage intérieur (78) un filetage avec pas à gauche.

4. Robinet à soupape d'arrêt selon la revendication 3, **caractérisé en ce que** la cloche filetée (7) est formée à partir d'une pièce support (71) en forme de pot, qui présente un embout (74) cylindrique creux, lequel présente le deuxième filetage intérieur (78) et qui est muni d'un filetage extérieur (76) sur lequel est vissée et collée une douille filetée (77) le dépassant en longueur, douille qui présente le premier filetage intérieur (75).

5. Robinet à soupape d'arrêt selon la revendication 3 ou 4, **caractérisé en ce que** la douille d'affichage (8) est fixée à l'extérieur contre la partie têtière (1) et entoure la cloche filetée (7).

6. Robinet à soupape d'arrêt selon la revendication 5, **caractérisé en ce que** la douille d'affichage (8) présente une saillie de crantage (82) par laquelle elle encrante dans une gorge (19) disposée à cette fin contre la partie têtière (1).

7. Robinet à soupape d'arrêt selon l'une des revendications précédentes, **caractérisé en ce qu'**au moins une surface d'affichage (79) présente au moins marquage caractérisant la « position ouverte » et un marquage (791) caractérisant la « position fermée ».

8. Robinet à soupape d'arrêt selon l'une des revendications précédentes, **caractérisé en ce qu'**une poignée (57) est disposée sur la broche (5) et est reliée avec cette dernière sans pouvoir tourner, poignée dans laquelle la douille d'affichage (8) fait saillie.

9. Robinet à soupape d'arrêt selon l'une des revendications précédentes, **caractérisé en ce que** le cylindre de compression (2) comprend une pompe d'équilibrage de pression formée par un deuxième volume (22) de piston du cylindre de compression (2), volume qui est relié par un conduit traversant (23) avec le premier volume de piston (21) et dans lequel un piston de pompage (3) est disposé déplaçable, piston qui est relié avec la broche (5) par filetage d'engrènement interposé, broche via la rotation de laquelle il peut être déplacé.

10. Robinet à soupape d'arrêt selon la revendication 9, **caractérisé en ce que** le piston (3) de pompage présente une barre de guidage (38) qui fait saillie à travers le canal traversant (23).

11. Robinet à soupape d'arrêt selon la revendication 9 ou 10, **caractérisé en ce que** le piston antiretour (4) est guidé dans le premier volume de piston (21) via une bague coulissante (25) munie d'une fente d'équilibrage de pression (251).

12. Robinet à soupape d'arrêt selon la revendication 10 ou 11, **caractérisé en ce que** le piston antiretour (4) présente un alésage borgne (41) dans lequel la barre de guidage (38) engrène lorsque le piston antiretour (4) se trouve en position rentrée dans le premier volume (21) de piston, sachant que dans le piston antiretour (4) a été ménagé de préférence un alésage radial d'équilibrage de pression (45) qui aboutit dans l'alésage borgne (41) axial.

13. Robinet à soupape d'arrêt selon la revendication 12, **caractérisé en ce que** dans l'alésage borgne (41) axial du piston antiretour (4) est disposé un ressort (47) précontraint contre le cylindre de compression (2).

14. Robinet à soupape d'arrêt selon l'une des revendications 9 à 13, **caractérisé en ce que** le piston (3) de pompage présente une barre d'entraînement (34) qui engrène avec la broche (5), sachant que la barre d'entraînement (34) présente de préférence un filetage extérieur (36) qui engrène dans un alésage fileté (54) ménagé dans la broche (5).

15. Robinet à soupape d'arrêt selon la revendication 1, **caractérisé en ce que** le cylindre de compression (2') présente un alésage borgne (28) muni d'un filetage intérieur (281) dans lequel engrène un filetage extérieur (58) disposé à cet effet contre l'extrémité de la broche (5').
